# EUROPEAN PATENT APPLICATION

(11) **EP 4 475 243 A1**
(43) Date of publication of application: **11.12.2024**
(21) Application number: 24170945.0
(22) Date of filing: 18.04.2024
(51) Int. Cl.: H01M 10/04, H01M 10/0525, H01M 10/0567, H01M 10/0568, H01M 4/36, H01M 4/38, H01M 4/525, H01M 4/587, H01M 10/0569

(54) **RECHARGEABLE LITHIUM BATTERY**

(30) Priority: 05.06.2023 KR 20230072450
(71) Applicant: Samsung SDI Co., Ltd., Yongin-si, Gyeonggi-do 17084 (KR)
(72) Inventor: Kim, Aeran, 17084 Yongin-si, Gyeonggi-do (KR); Kim, Myunghoon, 17084 Yongin-si, Gyeonggi-do (KR); Park, Injun, 17084 Gyeonggi-do (KR); Oh, Seungryong, 17084 Yongin-si, Gyeonggi-do (KR); Shin, Jeongmin, 17084 Yongin-si, Gyeonggi-do (KR); Kim, Yunhee, 17084 Yongin-si, Gyeonggi-do (KR)
(74) Representative: Gulde & Partner

(57) **Abstract**

A rechargeable lithium battery including a cylindrical can; an electrode assembly in the cylindrical can; and an electrolyte in the electrode assembly is provided. An electrolyte additive and a lithium imide salt are included in the electrolyte and the volume of a cylindrical can is well-defined.

## Description

### BACKGROUND

### 1. Field

One or more embodiments of the present disclosure relate to a rechargeable lithium battery.

### 2. Description of the Related Art

A rechargeable lithium battery may be recharged and has three or more times higher (i.e., has at least three times more) energy density per unit weight than a comparable lead storage (lead-acid) battery, a comparable nickel-cadmium battery, a comparable nickel-hydrogen battery, a comparable nickel-zinc battery and/or the like. The rechargeable lithium battery may be highly charged (e.g., to a relatively high energy density) and thus, is commercially manufactured for a laptop, a cell phone, an electric tool, an electric bike, and/or the like., Researches on improvement the rechargeable lithium battery (e.g., to provide of additional energy density) have also been actively made.

The rechargeable lithium battery is manufactured by injecting an electrolyte into a (e.g., its) battery cell, which includes a positive electrode including a positive electrode active material capable of intercalating/deintercalating lithium and a negative electrode including a negative electrode active material capable of intercalating/deintercalating lithium.

One of the recent development directions for a rechargeable lithium battery is to improve high-temperature operating characteristics. In general, a rechargeable lithium battery may experience complications such as resistance increasing at high temperatures, and/or cycle-life being reduced.

However, if the battery case housing the electrode assembly is a cylindrical can, the complications may become more severe depending on a volume of the cylindrical can.

### SUMMARY

The invention is defined by the appended claims. The description that follows is subjected to this limitation. Any disclosure lying outside the scope of said claims is only intended for illustrative as well as comparative purposes. Aspects of embodiments are directed toward suppressing or preventing an increase in the resistance at high temperatures, and/or the cycle-life decreases in a rechargeable lithium battery utilizing a cylindrical can. Additional aspects will be set forth in part in the description which follows and, in part, will be apparent from the description, or may be learned by practice of the presented embodiments of the disclosure.

According to the present invention there is provided a rechargeable lithium battery including a cylindrical can having a volume of 10 to 140 cubic centimeter (cm³); an electrode assembly in (e.g., accommodated in) the cylindrical can; and an electrolyte in (e.g., impregnating) the electrode assembly. The electrolyte includes a non-aqueous organic solvent; a lithium salt including a lithium imide salt; and an additive including a compound represented by Chemical Formula 1, and the lithium imide salt is included in an amount of 20 to 70 wt% based on a total amount of the lithium salt: 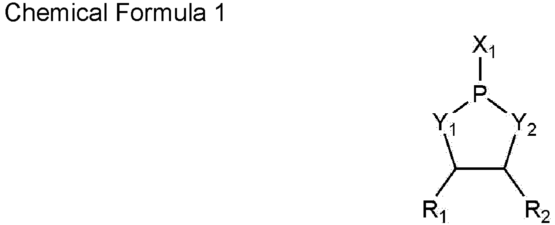 wherein, in Chemical Formula 1,
X₁ is a halogen atom;
Y₁ and Y₂ are each independently be O or S; and
R₁ and R₂ are each independently H, a halogen atom, a substituted or unsubstituted C1 to C10 alkyl group, vinyl group, a substituted or unsubstituted C6 to C10 aryl group, or a substituted or unsubstituted C2 to C10 heteroaryl group including a hetero atom of N, O, S, or P.

The rechargeable lithium battery can suppress or reduce an increase in resistance at high temperatures and/or improve or secure its cycle-life by adding an electrolyte additive and a lithium imide salt while controlling the volume of the cylindrical can.

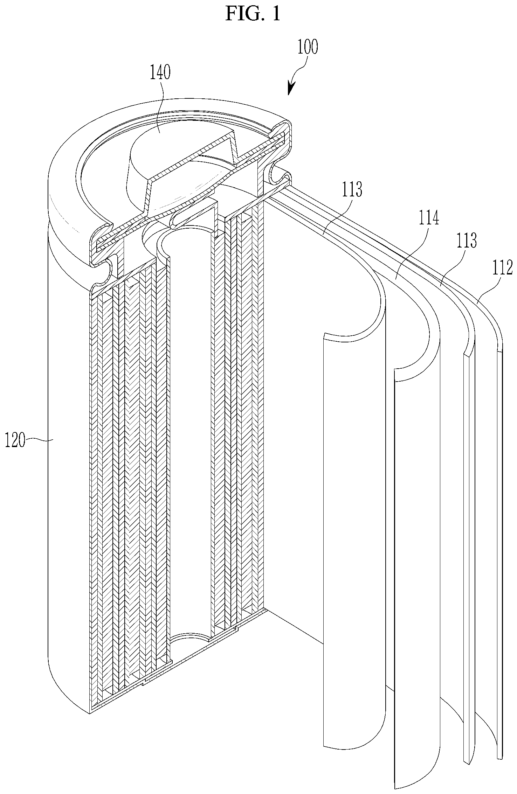

### BRIEF DESCRIPTION OF THE DRAWING

The drawing is a schematic view showing a rechargeable lithium battery according to some example embodiments of the present invention.

### DETAILED DESCRIPTION

Hereinafter, a rechargeable lithium battery according to some example embodiments of the present disclosure will be described in more detail with reference to the attached drawing, wherein like reference numerals refer to like elements throughout, and duplicative descriptions thereof may not be provided. In this regard, the present embodiments may be modified to have different forms and should not be construed as being limited to the descriptions set forth herein.

As utilized herein, the term "and/or" includes any and all combinations of one or more of the associated listed items. Expressions such as "at least one of," if preceding a list of elements, modify the entire list of elements and do not modify the individual elements of the list.

If it is described that an element is "on," "connected to," or "coupled to" another element, it will be understood that the element may be provided directly on another element or still another element may be interposed therebetween. On the other hand, if it is described that an element is "directly on" another element, still another element is not interposed therebetween.

It will be understood that, although the terms "first," "second," and "third" may be utilized herein to describe one or more suitable elements, components, regions, layers, and/or sections, these elements, components, regions, layers, and/or sections should not be limited by these terms. These terms are only utilized to distinguish one element, component, region, layer, or section from another region, layer, or section. Thus, a first element, component, region, layer, or section described herein may be termed a second element, component, region, layer, or section without departing from the teachings of the present specification.

As utilized herein, the singular forms "a," "an," and "the" are intended to include the plural forms, including "at least one," unless the content clearly indicates otherwise. As used herein, expressions such as "at least one," "one of," and "selected from," if preceding a list of elements, should not be construed as being limited to the singular, but may modify the entire list of elements and do not modify the individual elements of the list. For example, the expressions "at least one of a to c," "at least one of a, b or c," and "at least one of a, b and/or c" may indicate only a, only b, only c, both (e.g., simultaneously) a and b, both (e.g., simultaneously) a and c, both (e.g., simultaneously) b and c, all of a, b, and c, or variations thereof.

As utilized herein, the term "and/or" includes any and all combinations of one or more of the associated listed items. The terms "include," "includes," "including," "comprise," "comprises," "comprising," "having," "has," and/or "have" if utilized in the detailed description, specify a presence of stated features, regions, integers, steps, operations, elements, and/or components, but do not preclude the presence or addition of one or more other features, regions, integers, steps, operations, elements, components, and/or groups thereof.

Spatially relative terms such as "beneath," "below," "lower," "above," and "upper" may be utilized herein to easily describe one element or feature's relationship to another element or feature. It will be understood that the spatially relative terms are intended to encompass different orientations of a device in utilization or operation in addition to the orientation illustrated in the drawing. For example, if a device in the drawings is turned over, elements described as "below" or "beneath" other elements or features would then be "above" or "over" the other elements or features. Thus, the example term "below" may encompass both (e.g., opposite) orientations of above and below. The device may be otherwise oriented (rotated 90 degrees or at other orientations), and the spatially relative terms utilized herein may be interpreted accordingly.

As used herein, the terms "use," "using," and "used" may be considered synonymous with the terms "utilize," "utilizing," and "utilized," respectively.

The term "may" will be understood to refer to "one or more embodiments of the present disclosure," some of which include the described element and some of which exclude that element and/or include an alternate element. Similarly, alternative language such as "or" refers to "one or more embodiments of the present disclosure," each including a corresponding listed item.

The term "combination(s) thereof" may include a mixture, a laminate, a complex, a copolymer, an alloy, a blend, a reactant of constituents, and/or the like.

Unless otherwise defined, all terms (including chemical, technical and scientific terms) utilized herein have the same meaning as commonly understood by one of ordinary skill in the art to which the present disclosure belongs. In some embodiments, it will be further understood that terms, such as those defined in commonly utilized dictionaries, should be interpreted as having a meaning that is consistent with their meaning in the context of the relevant art and the present disclosure, and will not be interpreted in an idealized or overly formal sense unless expressly so defined herein.

In this context, "consisting essentially of" means that any additional components will not materially affect the chemical, physical, optical or electrical properties of the semiconductor film.

Further, in this specification, the phrase "on a plane," or "plan view," means viewing a target portion from the top, and the phrase "on a cross-section" means viewing a cross-section formed by vertically cutting a target portion from the side.

### Definitions

As utilized herein, the term "particle diameter" of particles refers to an average diameter if particles are spherical and refers to an average major axis length if particles are non-spherical. A particle diameter of particles may be measured utilizing a particle size analyzer (PSA). A "particle diameter" of particles is, for example, an "average particle diameter." An average particle diameter refers to, for example, a median particle diameter (D50). The median particle diameter (D50) is a particle size corresponding to a 50 % cumulative volume if a particle size distribution measured through a laser diffraction method is calculated from particles having a smaller particle size. In some embodiments, a "particle diameter" or an "average particle diameter" may be measured from a transmission electron microscope (TEM) image, a scanning electron microscope (SEM) image, and/or the like.

D50 refers to a particle size corresponding to a 50 % cumulative volume if a particle size distribution measured through a laser diffraction method is calculated from particles having a smaller particle size.

D90 refers to a particle size corresponding to a 90 % cumulative volume if a particle size distribution measured through a laser diffraction method is calculated from particles having a smaller particle size.

D10 refers to a particle size corresponding to a 10 % cumulative volume if a particle size distribution measured through a laser diffraction method is calculated from particles having a smaller particle size.

The term "electrode active material" as utilized herein refers to an electrode material that may undergo lithiation and delithiation.

The term "negative electrode active material" as utilized herein refers to a negative electrode material that may undergo lithiation and delithiation.

The terms "lithiate" and "lithiating" as utilized herein refer to a process of adding lithium to an electrode active material.

The terms "delithiate" and "delithiating" as utilized herein refer to a process of removing lithium from an electrode active material.

The terms "charge" and "charging" as utilized herein refer to a process of providing electrochemical energy to a battery.

The terms "discharge" and "discharging" as utilized herein refer to a process of removing electrochemical energy from a battery.

The term "positive electrode" as utilized herein refers to an electrode at which electrochemical reduction and lithiation occur during a discharging process.

The term "negative electrode" as utilized herein refers to an electrode at which electrochemical oxidation and delithiation occur during a discharging process.

As utilized herein, if a definition is not otherwise provided, "substituted" refers to replacement of hydrogen of a compound by a substituent selected from among a deuterium, a halogen, a hydroxyl group, an amino group, a substituted or unsubstituted C1 to C30 amine group, a nitro group, a substituted or unsubstituted C1 to C40 silyl group, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, a C1 to C20 alkoxy group, a C1 to C10 fluoroalkyl group, a cyano group, and/or combinations thereof.

In one or more embodiments of the present disclosure, "substituted" may refer to replacement of at least one hydrogen of a substituent or a compound by deuterium, a halogen, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, a C1 to C10 fluoroalkyl group, or a cyano group. In some embodiments of the present disclosure, "substituted" may refer to replacement of at least one hydrogen of a substituent or a compound by deuterium, a halogen group, a C1 to C20 alkyl group, a C6 to C30 aryl group, a C1 to C10 fluoroalkyl group, or a cyano group. In some embodiments of the present disclosure, "substituted" may refer to replacement of at least one hydrogen of a substituent or a compound by deuterium, a halogen, a C1 to C5 alkyl group, a C6 to C18 aryl group, a C1 to C5 fluoroalkyl group, or a cyano group. In some embodiments of the present disclosure, "substituted" may refer to replacement of at least one hydrogen of a substituent or a compound by deuterium, a cyano group, a halogen, a methyl group, an ethyl group, a propyl group, a butyl group, a phenyl group, a biphenyl group, a terphenyl group, a trifluoromethyl group, or a naphthyl group.

Hereinafter, a rechargeable lithium battery according to one or more embodiments will be described in more detail.

### Rechargeable Lithium Battery

A rechargeable lithium battery includes a cylindrical can; an electrode assembly in (e.g., accommodated in) the cylindrical can; and an electrolyte in (e.g., impregnating) the electrode assembly.

The rechargeable lithium battery can suppress or reduce an increase in resistance at high temperatures and/or secure or improve the cycle-life of the battery by adding an electrolyte additive and a lithium imide salt. The rechargeable lithium battery can suppress or reduce an increase in resistance at high temperatures and/or secure or improve the cycle-life of the battery by controlling the volume of the cylindrical can.

### Volume of Cylindrical Can

The volume of the cylindrical can is greater than or equal to 10 cm³. If the volume of the cylindrical can is significantly less (e.g., smaller) than 10 cm³, the resistance increase rate at high temperature is large.

The volume of the cylindrical can is less than or equal to 140 cm³. If the volume of the cylindrical can exceeds 140 cm³, battery resistance may increase and cycle-life may decrease at high temperatures regardless of the type or kind and content of the electrolyte additive.

In a cylindrical can with a volume of 10 to 140 cm³, the resistance increase rate changes as the type or kind and content of the electrolyte additive are changed. For example, the volume of the cylindrical can may be 16 cm³ to 136 cm³, or 16 cm³ to 133 cm³.

### Electrolyte

The electrolyte includes a non-aqueous organic solvent, a lithium salt, and an additive.

### Additive

The additive includes a compound represented by Chemical Formula 1:

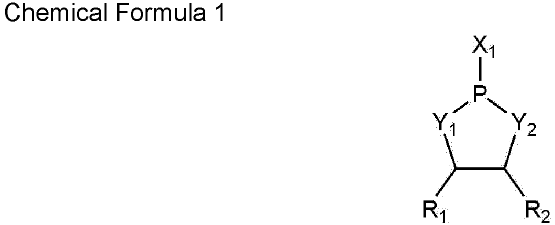

In Chemical Formula 1,
X₁ is a halogen atom;
Y₁ and Y₂ are each independently O or S;
R₁ and R₂ are each independently H, a halogen atom, a substituted or unsubstituted C1 to C10 alkyl group, vinyl group, a substituted or unsubstituted C6 to C10 aryl group, or a substituted or unsubstituted C2 to C10 heteroaryl group including a hetero atom of N, O, S, or P.

The additive has the effect of improving high-temperature characteristics of the battery.

In some example embodiments, X₁ may be a fluorine atom.

In some example embodiments, both (e.g., simultaneously) Y¹ and Y² may be O.

In some example embodiments, the additive may be a compound represented by Chemical Formula 1-1-1.

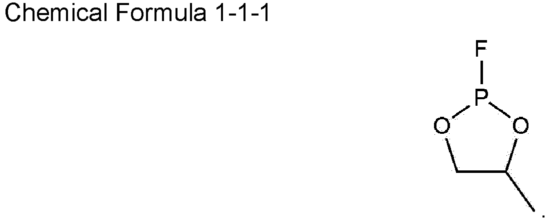

In some example embodiments, the additive may be included in an amount of 0.1 to 10 wt% based on a total amount of the electrolyte. For example, the additive may be included in an amount of 0.1 to 10 wt%, 0.2 to 5 wt%, 0.5 to 3 wt%, or 0.5 to 1.5 wt% based on a total amount of the electrolyte. In this range, the effect of improving the high-temperature characteristics of the battery may be significant.

### Lithium Salt

The lithium salt dissolved in the non-aqueous organic solvent supplies lithium ions in a battery, enables a basic operation of a rechargeable lithium battery, and improves transportation of the lithium ions between positive and negative electrodes.

The lithium salt includes a lithium imide salt, which has an effect of improving the high-temperature characteristics of the battery due to the structure including the imide salt.

However, the lithium imide salt has a significant effect only if it is included in an amount of 20 to 70 wt% based on a total amount of the lithium salt. If the content of the lithium imide salt based on a total amount of the lithium salt is less than 20 wt%, the content is small and thus an effect of improving high-temperature characteristics of the battery is minimal, and if it is more than 70 wt%, high-temperature characteristics of the battery may be deteriorated.

In some example embodiments, the lithium imide salt may be represented by Chemical Formula 2.

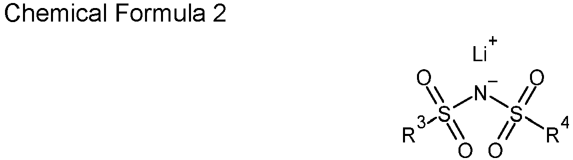

In Chemical Formula 2,
R³ and R⁴ are each independently a fluorine atom, or a C1 to C3 fluoroalkyl group substituted with at least one fluorine atom.

Each of R³ and R⁴ may independently be a fluorine atom or a methyl group substituted with three fluorine atoms.

In some example embodiments, the lithium imide salt may be represented by Chemical Formula 2-1 or 2-2.

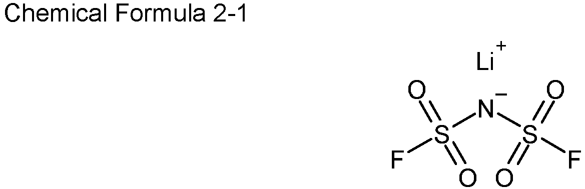

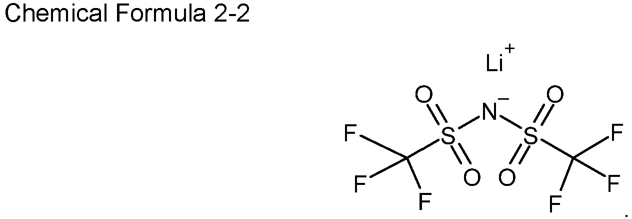

The lithium imide salt represented by Chemical Formula 2-1 may be lithium bis(fluorosulfonyl)imide (LFSI), and the lithium imide salt represented by Chemical Formula 2-2 may be lithium bis(trifluoromethanesulfonyl)imide.

In some example embodiments, the lithium imide salt may be included in an amount of 10 to 50 wt% based on a total amount of the lithium salt. In this range, an effect of improving the high-temperature characteristics of the battery may be significant.

In some example embodiments, the lithium salt may further include additional lithium salts in addition to the lithium imide salt. Examples of the additional lithium salts may include one or two or more selected from among LiPF₆, LiBF₄, LiDFOP, LiDFOB, LiPO₂F₂, LiSbF₆, LiAsF₆, LiN(SO₂C₂F₅)₂, Li(CF₃SO₂)₂N, LiN(SO₃C₂F₅)₂, LiC₄F₉SO₃, LiClO₄, LiAlO₂, LiAlCl₄, LiN(CₓF₂ₓ₊₁SO₂)(C_{y}F_{2y+1}SO₂) (where x and y are natural numbers, for example each an integer from 1 to 20), LiCl, Lil, and LiB(C₂O₄)₂ (lithium bis(oxalato) borate: LiBOB).

In some example embodiments, a total concentration of lithium salt may be within the range of 0.1 M to 2.0 M. If the lithium salt is included at the described concentration range, an electrolyte may have excellent or suitable performance and lithium ion mobility due to optimal or suitable electrolyte conductivity and viscosity.

### Non-aqueous Organic Solvent

The non-aqueous organic solvent serves as a medium for transmitting ions taking part in the electrochemical reaction of a battery.

The non-aqueous organic solvent may include a carbonate-based, ester-based, ether-based, ketone-based, alcohol-based, or aprotic solvent.

The carbonate-based solvent may include ethylmethyl carbonate (EMC), dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like. The ester-based solvent may include methyl acetate, ethyl acetate, n-propyl acetate, t-butyl acetate, methylpropionate, ethylpropionate, propylpropionate, decanolide, mevalonolactone, caprolactone, and/or the like. The ether-based solvent may include dibutyl ether, tetraglyme, diglyme, dimethoxyethane, 2-methyltetrahydrofuran, tetrahydrofuran, and/or the like. The ketone-based solvent may include cyclohexanone and/or the like. The alcohol-based solvent may include ethyl alcohol, isopropyl alcohol, and/or the like, and examples of the aprotic solvent include nitriles such as R-CN (wherein R is a C2 to C20 linear, branched, or cyclic hydrocarbon group, a double bond, an aromatic ring, or an ether bond), amides such as dimethylformamide, dioxolanes such as 1,3-dioxolane, sulfolanes, and/or the like.

The non-aqueous organic solvent may be utilized alone or in combination with one or more of them, and if utilized in combination with one or more, a mixing ratio may be appropriately adjusted according to the desired or suitable battery performance, which is well understood by those skilled in the art.

The carbonate-based solvent is prepared by mixing a cyclic carbonate and a chain carbonate. The cyclic carbonate and chain carbonate are mixed together in a volume ratio of 5:95 to 50:50. If the mixture is utilized as an electrolyte, it may have enhanced performance (e.g., the mixture may provide enhanced performance to the electrolyte and/or the rechargeable lithium battery).

For example, ethylene carbonate (EC) may be utilized as the cyclic carbonate, and ethylmethyl carbonate (EMC) and dimethyl carbonate (DMC) may be utilized as the chain carbonate.

More specifically, the non-aqueous organic solvent may include a carbonate-based solvent in which ethylene carbonate (EC), ethylmethyl carbonate (EMC), and dimethyl carbonate (DMC) are mixed. For example, the carbonate-based solvent in which ethylene carbonate (EC), ethylmethyl carbonate (EMC), and dimethyl carbonate (DMC) are mixed is mixed in a volume ratio of EC:EMC:DMC = 1:0.5:5 to 5:3:10, which may improve performance of the electrolyte.

The non-aqueous organic solvent may further include an aromatic hydrocarbon-based solvent as well as the carbonate-based solvent. The carbonate-based solvent and aromatic hydrocarbon-based solvent may be mixed together in a volume ratio of 1:1 to 30:1.

As the aromatic hydrocarbon-based solvent, an aromatic hydrocarbon-based compound of Chemical Formula 3 may be utilized.

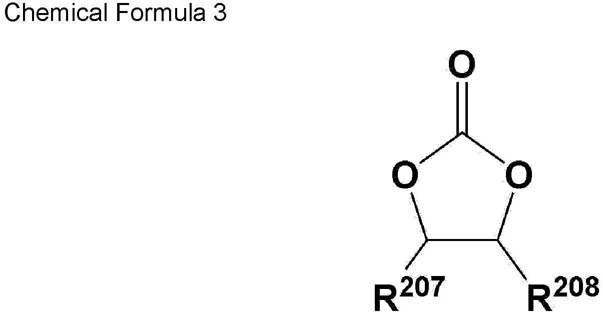

In Chemical Formula 3, R²⁰⁷ and R²⁰⁸ may each independently be the same or different and are selected from among hydrogen, a halogen, a cyano group (CN), a nitro group (NO₂), or a C1 to C5 fluoroalkyl group, provided that at least one of R²⁰⁷ and R²⁰⁸ is a halogen, a cyano group (CN), a nitro group (NO₂), and/or a C1 to C5 fluoroalkyl group. In some embodiments, R²⁰⁷ and R²⁰⁸ are not concurrently (e.g., simultaneously) hydrogen.

Examples of the ethylene carbonate-based compound include difluoro ethylenecarbonate, chloroethylene carbonate, dichloroethylene carbonate, bromoethylene carbonate, dibromoethylene carbonate, nitroethylene carbonate, cyanoethylene carbonate or fluoroethylene carbonate. The amount of the additive for improving cycle-life may be utilized within an appropriate or suitable range.

### Positive Electrode

The positive electrode includes a positive electrode current collector and a positive electrode active material layer on the positive electrode current collector, and the positive electrode active material layer includes a positive electrode active material.

The positive electrode active material may include lithiated intercalation compounds that reversibly intercalate and deintercalate lithium ions.

For example, at least one composite oxide of lithium and a metal of cobalt, manganese, nickel, or one or more combinations thereof may be utilized.

The composite oxide having a coating layer on the surface thereof may be utilized, or a mixture of the composite oxide and the composite oxide having a coating layer may be utilized. The coating layer may include a coating element compound selected from among oxide of a coating element, hydroxide of a coating element, oxyhydroxide of a coating element, oxycarbonate of a coating element, and/or hydroxycarbonate of a coating element. The compound for the coating layer may be either amorphous or crystalline. The coating element included in the coating layer may be Mg, Al, Co, K, Na, Ca, Si, Ti, V, Sn, Ge, Ga, B, As, Zr, or a mixture thereof. The coating process may include any suitable (related art) processes as long as it does not cause any side effects on the properties of the positive electrode active material (e.g., spray coating, dipping), which should be apparent to persons having ordinary skill in this art, and thus a detailed description thereof is omitted.

For example, the positive electrode active material may include a lithium nickel-based composite oxide represented by Chemical Formula A1:

Chemical Formula A1 Liₐ₁Niₓ₁M¹_{y1}M²_{z1}O_{2-b1}X_{b1}

In Chemical Formula A1, 0.9≤a1≤1.2, 0.7≤x1≤1, 0≤y1≤0.2, 0≤z1≤0.2, 0.9≤x1+y1+z1≤1.1, and 0≤b1≤0.1; M¹ and M² may each independently be one or more element selected from among Al, B, Ba, Ca, Ce, Co, Cr, Cu, Fe, Mg, Mn, Mo, Nb, Si, Sr, Ti, V, W, and Zr; and X is one or more element selected from among F, P, and S.

In Chemical Formula A1, 0.75≤x1≤1, 0≤y1≤0.18, and 0≤z1≤0.18; 0.85≤x1≤1, 0≤y1≤0.15, and 0≤z1≤0.15; or 0.9≤x1≤1, 0≤y1≤0.1, and 0≤z1≤0.1.

For example, the positive electrode active material may include a lithium nickel-based composite oxide represented by Chemical Formula A2. The compound represented by Chemical Formula A2 may be referred to be a lithium nickel cobalt-based complex oxide:

Chemical Formula A2 Liₐ₂Niₓ₂Co_{y2}M³_{z2}O_{2-b2}X_{b2}

In Chemical Formula A2, 0.9≤a2≤1.8, 0.7≤x2<1, 0<y2≤0.2, 0≤z2≤0.2, 0.9≤x2+y2+z2≤1.1, and 0≤b2≤0.1, M³ is one or more element selected from among Al, B, Ba, Ca, Ce, Cr, Fe, Mg, Mn, Mo, Nb, Si, Sr, Ti, V, W, and Zr, and X is one or more element selected from among F, P, and S.

In Chemical Formula A2, 0.75≤x2≤0.99, 0<y2≤0.15, and 0≤z2≤0.15; 0.85≤x2≤0.99, 0.01≤y2≤0.15, and 0.01≤z2≤0.15; or 0.9≤x2≤0.99, 0.01≤y2≤0.1, and 0.01≤z2≤0.1.

As an example, the positive electrode active material may include a lithium nickel-based composite oxide represented by Chemical Formula A3. The compound of Chemical Formula A3 may be referred to as lithium nickel-cobalt-aluminum oxide or lithium nickel-cobalt-manganese oxide.

Chemical Formula A3 Liₐ₃Niₓ₃Co_{y3}M⁴_{z3}M⁵_{w3}O_{2-b3}X_{b3}

In Chemical Formula A3, 0.9≤a3≤1.8, 0.7≤x3≤0.98, 0.01≤y3≤0.19, 0.01≤z3≤0.19, 0≤w3≤0.19, 0.9≤x3+y3+z3+w3≤1.1, and 0≤b3≤0.1, M⁴ is one or more element selected from among Al, and Mn, M⁵ is one or more element selected from among B, Ba, Ca, Ce, Cr, Fe, Mg, Mo, Nb, Si, Sr, Ti, V, W, and Zr, and X is one or more element selected from among F, P, and S.

In Chemical Formula A3, 0.75≤x3≤0.98, 0≤y3≤0.16, and 0≤z3≤0.16; 0.85≤x3≤0.98, 0.01≤y3≤0.14, 0.01≤z3≤0.14, and 0≤w3≤0.14; or 0.9≤x3≤0.98, 0.01≤y3≤0.09, 0.01≤z3≤0.09, and 0≤w3≤0.09.

As an example, the positive electrode active material may include a lithium nickel-based composite oxide represented by Chemical Formula A4. The compound of Chemical Formula A4 may be referred to be a cobalt-free lithium nickel-manganese oxide.

Chemical Formula A4 Liₐ₄Niₓ₄Mn_{y4}M⁶_{z4}O_{2-b4}X_{b4}

In Chemical Formula A4, 0.9≤a2≤1.8, 0.7≤x4<1, 0<y4≤0.2, 0≤z4≤0.2, 0.9≤x4+y4+z4≤1.1, and 0≤b4≤0.1, M⁶ is one or more element selected from among Al, B, Ba, Ca, Ce, Cr, Fe, Mg, Mo, Nb, Si, Sr, Ti, V, W, and Zr, and X is one or more element selected from among F, P, and S.

In the positive electrode of some example embodiments, a content of the positive electrode active material may be 90 wt% to 98 wt%, 50 wt% to 99 wt%, 60 wt% to 99 wt%, 70 wt% to 99 wt%, 80 wt% to 99 wt%, or 90 wt% to 99 wt% based on a total weight of the positive electrode active material layer.

In some embodiments of the present disclosure, the positive electrode active material layer may optionally include a conductive material and a binder. In this case, each content of the conductive material and the binder may be 1.0 wt% to 5.0 wt%, based on a total weight of the positive electrode active material layer.

The conductive material is utilized to impart conductivity to the negative electrode, and any electrically conductive material may be utilized as a conductive material unless it causes a chemical change in a battery. Examples of the conductive material may include a carbon-based material such as natural graphite, artificial graphite, carbon black, acetylene black, Ketjen black, carbon fiber, and/or the like; a metal-based material of a metal powder or a metal fiber including copper, nickel, aluminum, silver, and/or the like; a conductive polymer such as a polyphenylene derivative; or a mixture thereof.

The binder improves binding properties of positive electrode active material particles with one another and with a current collector and examples thereof may be polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and/or the like, but are not limited thereto.

The positive electrode current collector may include Al, but is not limited thereto.

### Negative Electrode

The negative electrode includes a negative electrode current collector and a negative electrode active material layer including a negative electrode active material formed on the negative electrode current collector.

The negative electrode active material may be a material that reversibly intercalates/deintercalates lithium ions, a lithium metal, a lithium metal alloy, a material capable of doping and dedoping lithium, or a transition metal oxide.

The material that reversibly intercalates/deintercalates lithium ions includes carbon materials. The carbon material may be any generally-utilized carbon-based negative electrode active material in a rechargeable lithium battery. Examples of the carbon material include crystalline carbon, amorphous carbon, and a combination thereof. The crystalline carbon may be non-shaped, or sheet, flake, spherical, or fiber shaped natural graphite or artificial graphite. The amorphous carbon may be a soft carbon, a hard carbon, a mesophase pitch carbonized product, fired coke, and/or the like.

The lithium metal alloy may include lithium and a metal selected from among Na, K, Rb, Cs, Fr, Be, Mg, Ca, Sr, Si, Sb, Pb, In, Zn, Ba, Ra, Ge, Al, and Sn.

The material capable of doping and dedoping lithium may include Si, SiOₓ (0 < x < 2), a Si-Q alloy (wherein Q is selected from among an alkali metal, an alkaline-earth metal, a Group 13 element, a Group 14 element, a Group 15 element, a Group 16 element, a transition metal, a rare earth element, and one or more combinations thereof, and not Si), Sn, SnO₂, a Sn-R alloy (wherein R is an alkali metal, an alkaline-earth metal, a Group 13 element, a Group 14 element, a Group 15 element, a Group 16 element, a transition element, a rare earth element, or one or more combinations thereof, and not Sn), and/or the like. At least one of them may be mixed with SiO₂.

The elements Q and R may be selected from among Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and one or more combinations thereof.

The transition metal oxide may be a vanadium oxide, a lithium vanadium oxide, and/or the like.

In some example embodiments, the negative electrode active material may include at least one of graphite and a Si composite.

The Si composite may include a core including Si-containing particles and amorphous carbon. For example, the Si-containing particles may include at least one selected from among Si-C composite, SiOₖ (0 < k ≤ 2), and an Si alloy.

For example, the Si-C composite may include a core including Si particles and amorphous carbon.

A central portion of the core, including the Si particles, may also include pores, and a radius of the central portion may correspond to 30% to 50% of a radius of the Si-C composite.

The Si particles may have an average particle diameter of 10 nanometer (nm) to 200 nm.

As utilized herein, the average particle diameter may be a particle size (D50) at a volume ratio of 50% in a cumulative size-distribution curve.

If the average particle diameter of the Si particles is within the described range, volume expansion occurring during charging and discharging may be suppressed or reduced, and a disconnection of a conductive path due to particle crushing during charging and discharging may be prevented or reduced.

The Si particles may be included in an amount of 1 wt% to 60 wt%, for example, 3 wt% to 60 wt%, based on a total weight of the Si-C composite.

The central portion may not include (e.g., may exclude) amorphous carbon, but the amorphous carbon may be present only on the surface portion of the negative electrode active material.

Herein, the surface portion indicates a region from the central portion of the negative electrode active material to the outermost surface of the negative electrode active material.

In some embodiments, the Si particles are substantially uniformly included over the negative electrode active material, that is, present at a substantially uniform concentration in the central portion and the surface portion thereof.

The amorphous carbon may be soft carbon, hard carbon, mesophase pitch carbonized product, calcined coke, or one or more combinations thereof.

The negative electrode active material may further include crystalline carbon.

If the negative electrode active material includes a Si-C composite and crystalline carbon together, the Si-C composite and crystalline carbon may be included in the form of a mixture, and in this case, the Si-C composite and crystalline carbon may be included in a weight ratio of 1:99 to 50:50. More specifically, the Si-C composite and crystalline carbon may be included in a weight ratio of 3 : 97 to 20 : 80 or 5 : 95 to 20 : 80.

The crystalline carbon may be for example graphite, and more specifically natural graphite, artificial graphite, or a mixture thereof.

The crystalline carbon may have an average particle diameter of 5 micrometer (µm) to 30 µm.

The amorphous carbon precursor may include a coal-based pitch, mesophase pitch, petroleum-based pitch, coal-based oil, petroleum-based heavy oil, or a polymer resin such as a phenol resin, a furan resin, or a polyimide resin.

In the negative electrode active material layer, the negative electrode active material may be included in an amount of 95 wt% to 99 wt% based on a total weight of the negative electrode active material layer.

In some example embodiments, the negative electrode active material layer may include a binder, and optionally a conductive material. In the negative electrode active material layer, the amount of the binder may be 1 wt% to 5 wt% based on a total weight of the negative electrode active material layer. If it further includes the conductive material, it may include 90 wt% to 98 wt% of the negative electrode active material, 1 wt% to 5 wt% of the binder, and 1 wt% to 5 wt% of the conductive material.

The binder improves binding properties of negative electrode active material particles with one another and with a current collector. The binder may be a non-water-soluble binder, a water-soluble binder, or a combination thereof.

The non-water-soluble binder may be polyvinylchloride, carboxylated polyvinylchloride, polyvinylfluoride, polyurethane, polytetrafluoroethylene, polyvinylidene fluoride, polyethylene, polypropylene, polyamideimide, polyimide, or one or more combinations thereof.

The water-soluble binder may be a rubber-based binder or a polymer resin binder. The rubber-based binder may be selected from among a styrene-butadiene rubber, an acrylated styrene-butadiene rubber (SBR), an acrylonitrile-butadiene rubber, an acrylic rubber, a butyl rubber, a fluorine rubber, and one or more combinations thereof. The polymer resin binder may be selected from among polytetrafluoroethylene, ethylenepropylene copolymer, polyethyleneoxide, polyvinylpyrrolidone, polyepichlorohydrin, polyphosphazene, polyacrylonitrile, polystyrene, an ethylene propylenediene copolymer, polyvinylpyridine, chlorosulfonatedpolyethylene, latex, a polyester resin, an acrylic resin, a phenolic resin, an epoxy resin, polyvinylalcohol, and one or more combinations thereof.

If the water-soluble binder is utilized as the negative electrode binder, a cellulose-based compound may be further utilized to provide viscosity as a thickener. The cellulose-based compound includes one or more of carboxylmethyl cellulose, hydroxypropylmethyl cellulose, methyl cellulose, or alkali metal salts thereof. The alkali metal may be Na, K, or Li. Such a thickener may be included in an amount of 0.1 to 3 wt% based on 100 wt% of the negative electrode active material.

The conductive material is included to provide electrode conductivity and any electrically conductive material may be utilized as a conductive material unless it causes a chemical change. Examples thereof may be a carbon-based material such as natural graphite, artificial graphite, carbon black, acetylene black, Ketjen black, carbon fiber and/or the like; a metal-based material such as a metal powder or a metal fiber of copper, nickel, aluminum, silver, and/or the like; a conductive polymer such as a polyphenylene derivative and/or the like, or one or more mixtures (and/or combinations) thereof.

The negative electrode current collector may be selected from among a copper foil, a nickel foil, a stainless steel foil, a titanium foil, a nickel foam, a copper foam, a polymer substrate coated with a conductive metal, and one or more combinations thereof.

### Separator

The rechargeable lithium battery may further include a separator between the negative electrode and the positive electrode, depending on a type or kind of the rechargeable lithium battery. This separator may be a porous substrate; or may be a composite porous substrate.

The porous substrate may be a substrate including pores, and lithium ions may move through the pores. The porous substrate may be for example may include polyethylene, polypropylene, polyvinylidene fluoride, and multi-layers thereof such as a polyethylene/polypropylene double-layered separator, a polyethylene/polypropylene/polyethylene triple-layered separator, and a polypropylene/polyethylene/polypropylene triple-layered separator.

The composite porous substrate may have a form including a porous substrate and a functional layer on the porous substrate. The functional layer may be, for example, at least one of a heat-resistant layer and an adhesive layer from the viewpoint of enabling additional function. For example, the heat-resistant layer may include a heat-resistant resin and optionally a filler.

In some embodiments, the adhesive layer may include an adhesive resin and optionally a filler.

The filler may be an organic filler or an inorganic filler.

Referring to the drawing, a rechargeable lithium battery 100 according to some example embodiments includes an electrode assembly including a negative electrode 112, a positive electrode 114 facing the negative electrode 112, a separator 113 between the negative electrode 112 and the positive electrode 114, and an electrolyte impregnating the negative electrode 112, positive electrode 114, and separator 113, a battery case 120 housing the electrode assembly, and a sealing member 140 sealing the battery case 120. Herein, the battery case is a cylindrical can.

Numerical ranges disclosed herein include and are intended to disclose all subsumed sub-ranges of the same numerical precision. For example, a range of "1.0 to 10.0" includes all subranges having a minimum value equal to or greater than 1.0 and a maximum value equal to or less than 10.0, such as, for example, 2.4 to 7.6. Applicant therefore reserves the right to amend this specification, including the claims, to expressly recite any sub-range subsumed within the ranges expressly recited herein.

Hereinafter, examples and comparative examples of the present disclosure will be described. The following example is only an example of the present disclosure, and the present disclosure is not limited to the following examples.

### EXAMPLES

### Preparation of Electrolyte

### Preparation Example 1

As for a non-aqueous organic solvent, a carbonate-based solvent was prepared by mixing ethylene carbonate (EC): ethylmethyl carbonate (EMC):
dimethyl carbonate (DMC) = 20:10:70 in a volume ratio.

A lithium salt was mixed with the non-aqueous organic solvent and an additive was added to obtain the final electrolyte.

The lithium salt includes 10 wt% of lithium bis(fluorosulfonyl)imide (LiFSI), as represented by Chemical Formula 2-1, and 90 wt% of LiPF₆ based on a total amount of the lithium salt, and has a total molar concentration of 1.5 M.

In some embodiments, the additive is a compound (CAS No. 16415-09-1) represented by Chemical Formula 1-1-1, and its content is 10 wt% based on 100 wt% of the electrolyte.

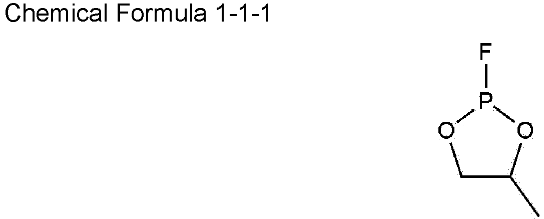

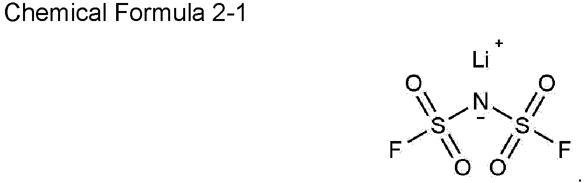

### Preparation Example 2

An electrolyte for a rechargeable lithium battery was prepared in substantially the same manner as Preparation Example 1, except that the content of the additive in 100 wt% of the electrolyte was changed to 20 wt%.

### Preparation Example 3

An electrolyte for a rechargeable lithium battery was prepared in substantially the same manner as Preparation Example 1, except that the content of the additive in 100 wt% of the electrolyte was changed to 35 wt%.

### Preparation Example 4

An electrolyte for a rechargeable lithium battery was prepared in substantially the same manner as Preparation Example 1, except that the content of the additive in 100 wt% of the electrolyte was changed to 50 wt%.

### Preparation Example 5

An electrolyte for a rechargeable lithium battery was prepared in substantially the same manner as Preparation Example 1, except that the content of the additive in 100 wt% of the electrolyte was changed to 70 wt%.

### Preparation Example 6

An electrolyte for a rechargeable lithium battery was prepared in substantially the same manner as Preparation Example 1, except that the content of the additive in 100 wt% of the electrolyte was changed to 90 wt%.

### Comparative Preparation Example 1

An electrolyte for a rechargeable lithium battery was prepared in substantially the same manner as Preparation Example 1, except that LiPF₆ was utilized alone (100 wt%) as the lithium salt and no additives were added.

### Comparative Preparation Example 2

An electrolyte for a rechargeable lithium battery was prepared in substantially the same manner as Preparation Example 1, except that LiPF₆ was utilized alone (100 wt%) as the lithium salt.

### Comparative Preparation Example 3

An electrolyte for a rechargeable lithium battery was prepared in substantially the same manner as Preparation Example 1, except that except that no additives were added.

### Comparative Preparation Example 4

An electrolyte for a rechargeable lithium battery was prepared in substantially the same manner as Preparation Example 1, except that the content of the additive in 100 wt% of the electrolyte was changed to 90 wt%.

### Manufacture of Rechargeable Lithium Battery Cells

### Example 1

LiNi_{0.94}Co_{0.04}Al_{0.02}O₂ as a positive electrode active material, polyvinylidene fluoride as a binder, and Ketjen black as a conductive material were mixed respectively in a weight ratio of 97:2:1, and then, dispersed in N-methyl pyrrolidone to prepare positive electrode active material slurry.

The positive electrode active material slurry was coated on a 14 micrometer (µm)-thick Al foil, dried at 110 °C, and pressed to manufacture a positive electrode.

A mixture of artificial graphite and silicon particles in a weight ratio of 93.5:6.5 was utilized as the negative electrode active material, and the negative electrode active material, a styrene-butadiene rubber binder, and carboxylmethyl cellulose in a weight ratio of 97:1:2 were dispersed in distilled water to prepare negative electrode active material slurry.

The negative electrode active material slurry was coated on a 10 µm-thick Cu foil, dried at 100 °C, and pressed to manufacture a negative electrode.

An electrode assembly was manufactured by assembling the manufactured positive electrode and negative electrode and a 25 µm-thick polyethylene separator, the electrode assembly was housed in a cylindrical can having a volume of 17 cubic centimeter (cm³), a diameter of 1.8 centimeter (cm), and a height of 6.5 cm as a battery case, and each rechargeable lithium battery cell was manufactured by injecting the electrolyte for a rechargeable lithium battery of Preparation

### Example 1.

### Example 2

A rechargeable lithium battery cell was manufactured in substantially the same manner as Example 1, except that a cylindrical can having a volume of 24 cm³, a diameter of 2.1 cm, and a height of 7.0 cm was utilized as the battery case.

### Example 3

A rechargeable lithium battery cell was manufactured in substantially the same manner as Example 1, except that a cylindrical can having a volume of 133 cm³, a diameter of 4.6 cm, and a height of 8.0 cm was utilized as the battery case.

### Example 4

A rechargeable lithium battery cell was manufactured in substantially the same manner as Example 1, except that the electrolyte of Preparation Example 2 was utilized as the electrolyte.

### Example 5

A rechargeable lithium battery cell was manufactured in substantially the same manner as Example 4, except that a cylindrical can having a volume of 24 cm³, a diameter of 2.1 cm, and a height of 7.0 cm was utilized as the battery case.

### Example 6

A rechargeable lithium battery cell was manufactured in substantially the same manner as Example 4, except that a cylindrical can having a volume of 133 cm³, a diameter of 4.6 cm, and a height of 8.0 cm was utilized as the battery case.

### Example 7

A rechargeable lithium battery cell was manufactured in substantially the same manner as Example 1, except that the electrolyte of Preparation Example 3 was utilized as the electrolyte.

### Example 8

A rechargeable lithium battery cell was manufactured in substantially the same manner as Example 7, except that a cylindrical can having a volume of 24 cm³, a diameter of 2.1 cm, and a height of 7.0 cm was utilized as the battery case.

### Example 9

A rechargeable lithium battery cell was manufactured in substantially the same manner as Example 7, except that a cylindrical can having a volume of 133 cm³, a diameter of 4.6 cm, and a height of 8.0 cm was utilized as the battery case.

### Example 10

A rechargeable lithium battery cell was manufactured in substantially the same manner as Example 1, except that the electrolyte of Preparation Example 4 was utilized as the electrolyte.

### Example 11

A rechargeable lithium battery cell was manufactured in substantially the same manner as Example 10, except that a cylindrical can having a volume of 24 cm³, a diameter of 2.1 cm, and a height of 7.0 cm was utilized as the battery case.

### Example 12

A rechargeable lithium battery cell was manufactured in substantially the same manner as Example 10, except that a cylindrical can having a volume of 133 cm³, a diameter of 4.6 cm, and a height of 8.0 cm was utilized as the battery case.

### Example 13

A rechargeable lithium battery cell was manufactured in substantially the same manner as Example 1, except that the electrolyte of Preparation Example 5 was utilized as the electrolyte.

### Example 14

A rechargeable lithium battery cell was manufactured in substantially the same manner as Example 13, except that a cylindrical can having a volume of 24 cm³, a diameter of 2.1 cm, and a height of 7.0 cm was utilized as the battery case.

### Example 15

A rechargeable lithium battery cell was manufactured in substantially the same manner as Example 13, except that a cylindrical can having a volume of 133 cm³, a diameter of 4.6 cm, and a height of 8.0 cm was utilized as the battery case.

### Comparative Example 1

A rechargeable lithium battery cell was manufactured in substantially the same manner as Example 1, except that a cylindrical can having a volume of 1 cm³, a diameter of 1.2 cm, and a height of 0.5 cm was utilized as a battery case, and the electrolyte for a rechargeable lithium battery of Comparative Preparation Example 1 was utilized as an electrolyte.

### Comparative Example 2

A rechargeable lithium battery cell was manufactured in substantially the same manner as Comparative Example 1, except that a cylindrical can having a volume of 17 cm³, a diameter of 1.8 cm, and a height of 6.5 cm was utilized as the battery case.

### Comparative Example 3

A rechargeable lithium battery cell was manufactured in substantially the same manner as Comparative Example 1, except that a cylindrical can having a volume of 24 cm³, a diameter of 2.1 cm, and a height of 7.0 cm was utilized as the battery case.

### Comparative Example 4

A rechargeable lithium battery cell was manufactured in substantially the same manner as Comparative Example 1, except that a cylindrical can having a volume of 133 cm³, a diameter of 4.6 cm, and a height of 8.0 cm was utilized as the battery case.

### Comparative Example 5

A rechargeable lithium battery cell was manufactured in substantially the same manner as Comparative Example 1, except that a cylindrical can having a volume of 296 cm³, a diameter of 5.6 cm, and a height of 12.0 cm was utilized as the battery case.

### Comparative Example 6

A rechargeable lithium battery cell was manufactured in substantially the same manner as Comparative Example 1, except that the electrolyte for a lithium secondary battery of Comparative Preparation Example 2 was utilized as the electrolyte.

### Comparative Example 7

A rechargeable lithium battery cell was manufactured in substantially the same manner as Comparative Example 6, except that a cylindrical can having a volume of 17 cm³, a diameter of 1.8 cm, and a height of 6.5 cm was utilized as the battery case.

### Comparative Example 8

A rechargeable lithium battery cell was manufactured in substantially the same manner as Comparative Example 6, except that a cylindrical can having a volume of 24 cm³, a diameter of 2.1 cm, and a height of 7.0 cm was utilized as the battery case.

### Comparative Example 9

A rechargeable lithium battery cell was manufactured in substantially the same manner as Comparative Example 6, except that a cylindrical can having a volume of 133 cm³, a diameter of 4.6 cm, and a height of 8.0 cm was utilized as the battery case.

### Comparative Example 10

A rechargeable lithium battery cell was manufactured in substantially the same manner as Comparative Example 6, except that a cylindrical can having a volume of 296 cm³, a diameter of 5.6 cm, and a height of 12.0 cm was utilized as the battery case.

### Comparative Example 11

A rechargeable lithium battery cell was manufactured in substantially the same manner as Comparative Example 1, except that the electrolyte for a lithium secondary battery of Comparative Preparation Example 3 was utilized as the electrolyte.

### Comparative Example 12

A rechargeable lithium battery cell was manufactured in substantially the same manner as Comparative Example 11, except that a cylindrical can having a volume of 17 cm³, a diameter of 1.8 cm, and a height of 6.5 cm was utilized as the battery case.

### Comparative Example 13

A rechargeable lithium battery cell was manufactured in substantially the same manner as Comparative Example 11, except that a cylindrical can having a volume of 24 cm³, a diameter of 2.1 cm, and a height of 7.0 cm was utilized as the battery case.

### Comparative Example 14

A rechargeable lithium battery cell was manufactured in substantially the same manner as Comparative Example 11, except that a cylindrical can having a volume of 133 cm³, a diameter of 4.6 cm, and a height of 8.0 cm was utilized as the battery case.

### Comparative Example 15

A rechargeable lithium battery cell was manufactured in substantially the same manner as Comparative Example 11, except that a cylindrical can having a volume of 296 cm³, a diameter of 5.6 cm, and a height of 12.0 cm was utilized as the battery case.

### Comparative Example 16

A rechargeable lithium battery cell was manufactured in substantially the same manner as Example 1, except that a cylindrical can having a volume of 1 cm³, a diameter of 1.2 cm, and a height of 0.5 cm was utilized as the battery case.

### Comparative Example 17

A rechargeable lithium battery cell was manufactured in substantially the same manner as Example 1, except that a cylindrical can having a volume of 296 cm³, a diameter of 5.6 cm, and a height of 12.0 cm was utilized as the battery case.

### Comparative Example 18

A rechargeable lithium battery cell was manufactured in substantially the same manner as Example 4, except that a cylindrical can having a volume of 1 cm³, a diameter of 1.2 cm, and a height of 0.5 cm was utilized as the battery case.

### Comparative Example 19

A rechargeable lithium battery cell was manufactured in substantially the same manner as Example 4, except that a cylindrical can having a volume of 296 cm³, a diameter of 5.6 cm, and a height of 12.0 cm was utilized as the battery case.

### Comparative Example 20

A rechargeable lithium battery cell was manufactured in substantially the same manner as Example 7, except that a cylindrical can having a volume of 1 cm³, a diameter of 1.2 cm, and a height of 0.5 cm was utilized as the battery case.

### Comparative Example 21

A rechargeable lithium battery cell was manufactured in substantially the same manner as Example 7, except that a cylindrical can having a volume of 296 cm³, a diameter of 5.6 cm, and a height of 12.0 cm was utilized as the battery case.

### Comparative Example 22

A rechargeable lithium battery cell was manufactured in substantially the same manner as Example 10, except that a cylindrical can having a volume of 1 cm³, a diameter of 1.2 cm, and a height of 0.5 cm was utilized as the battery case.

### Comparative Example 23

A rechargeable lithium battery cell was manufactured in substantially the same manner as Example 10, except that a cylindrical can having a volume of 296 cm³, a diameter of 5.6 cm, and a height of 12.0 cm was utilized as the battery case.

### Comparative Example 24

A rechargeable lithium battery cell was manufactured in substantially the same manner as Example 13, except that a cylindrical can having a volume of 1 cm³, a diameter of 1.2 cm, and a height of 0.5 cm was utilized as the battery case.

### Comparative Example 25

A rechargeable lithium battery cell was manufactured in substantially the same manner as Example 13, except that a cylindrical can having a volume of 296 cm³, a diameter of 5.6 cm, and a height of 12.0 cm was utilized as the battery case.

### Comparative Example 26

A rechargeable lithium battery cell was manufactured in substantially the same manner as Comparative Example 1, except that the electrolyte for a lithium secondary battery of Comparative Preparation Example 4 was utilized as the electrolyte.

### Comparative Example 27

A rechargeable lithium battery cell was manufactured in substantially the same manner as Comparative Example 26, except that a cylindrical can having a volume of 17 cm³, a diameter of 1.8 cm, and a height of 6.5 cm was utilized as the battery case.

### Comparative Example 28

A rechargeable lithium battery cell was manufactured in substantially the same manner as Comparative Example 26, except that a cylindrical can having a volume of 24 cm³, a diameter of 2.1 cm, and a height of 7.0 cm was utilized as the battery case.

### Comparative Example 29

A rechargeable lithium battery cell was manufactured in substantially the same manner as Comparative Example 26, except that a cylindrical can having a volume of 133 cm³, a diameter of 4.6 cm, and a height of 8.0 cm was utilized as the battery case.

### Comparative Example 30

A rechargeable lithium battery cell was manufactured in substantially the same manner as Comparative Example 26, except that a cylindrical can having a volume of 296 cm³, a diameter of 5.6 cm, and a height of 12.0 cm was utilized as the battery case.

### Evaluation: 60°C High-temperature Storage Evaluation

Each of the rechargeable lithium battery cells was subjected to initial formation in the following process. The cells were CC-CV charged to 4.2 volt (V) with a current of 0.2 coulomb (C) (0.05C cut-off) and then discharged to 2.5 V twice.

After the formation step, the rechargeable lithium battery cells were charged at 60 °C at 1C under the conditions of 4.2V cut-off constant current and 0.05C cut-off constant voltage to SOC 100% (SOC, state of charge = 100%) and stored for 60 days.

As described herein, the rechargeable lithium battery cells were stored at a high temperature of 60 °C, and then the capacity retention rate and resistance increase rate were evaluated as follows.

The capacity maintenance rate according to Equation 1 and the resistance increase rate according to Equation 2 were respectively calculated, and the results are shown in Table 1. Capacity retention rate = 100* (discharge capacity after 60 days of storage at 60 °C)/(initial discharge capacity) Resistance increase rate (ΔDC-IR) = 100* (DC-IR after 60 days of storage at 60 °C)/(initial DC-IR)

Herein, DC resistance (DC-IR) was calculated from a current difference and a voltage difference, if different currents were applied, and specifically, calculated from data at 18 seconds and 23 seconds obtained according to ΔR =ΔV/ΔI after constant current-discharging at 10 A for 10 seconds, at 1 A for 10 seconds, and at 10 A for 4 seconds in the initial full charge state.

### Evaluation: 45 °C High-temperature Cycle-life Evaluation

Each of the rechargeable lithium battery cells was subjected to initial formation in the following process. The cells were CC-CV charged to 4.2 V with a current of 0.2 C (0.05C cut-off) and then discharged to 2.5 V twice.

After the formation step, the rechargeable lithium battery cells were charged to 4.2 V CC-CV at 0.33 C at 45 °C (0.05C cut-off) and then discharged to 2.5 V 300 times.

The capacity retention rate was calculated according to Equation 3, and the results are shown in Table 1. cycle-life capacity retention rate = 100* (discharge capacity after 300 cycles at 45 °C)/(initial discharge capacity)

**Table 1**

| | Cylindrical can specifications | | Electrolyte | | 60 °C high-temperature characteristics | | 45 °C cycle-life |
|---|---|---|---|---|---|---|---|
| | Volume (cm³) | Diameter, height (cm) | Content of additive based on a total weight of electrolyte (wt%) | Content of lithium imide salt based on a total weight of lithium salt (wt%) | Capacity retention rate (%)@60th day | Resistance increase rate (%)@60th day | capacity retention rate (%) @300 cycle |
| Comp. Ex. 1 | 1 | diameter 1.2, height 0.5 | 0 | 0 | 46.7 | 94.9 | 87.4 |
| Comp. Ex. 2 | 17 | diameter 1.8, height 6.5 | 0 | 0 | 47.9 | 93.4 | 88.1 |
| Comp. Ex. 3 | 24 | diameter 2.1, height 7.0 | 0 | 0 | 47.6 | 91.5 | 86.1 |
| Comp. Ex. 4 | 133 | diameter 4.6, height 8.0 | 0 | 0 | 47.3 | 94.4 | 85.1 |
| Comp. Ex. 5 | 296 | diameter 5.6, height 12.0 | 0 | 0 | 43.2 | 99.2 | 85.4 |
| Comp. Ex. 6 | 1 | diameter 1.2, height 0.5 | 0 | 10 | 55.3 | 88.4 | 87.4 |
| Comp. Ex. 7 | 17 | diameter 1.8, height 6.5 | 0 | 10 | 57.9 | 85.6 | 88.2 |
| Comp. Ex. 8 | 24 | diameter 2.1, height 7.0 | 0 | 10 | 55.4 | 86.4 | 86.8 |
| Comp. Ex. 9 | 133 | diameter 4.6, height 8.0 | 0 | 10 | 53.2 | 86.7 | 85.2 |
| Comp. Ex. 10 | 296 | diameter 5.6, height 12.0 | 0 | 10 | 48.1 | 97.1 | 85.2 |
| Comp. Ex. 11 | 1 | diameter 1.2, height 0.5 | 1 | 0 | 52.4 | 91.1 | 87.6 |
| Comp. Ex. 12 | 17 | diameter 1.8, height 6.5 | 1 | 0 | 53.4 | 88.2 | 88..0 |
| Comp. Ex. 13 | 24 | diameter 2.1, height 7.0 | 1 | 0 | 52.1 | 86.9 | 86.3 |
| Comp. Ex. 14 | 133 | diameter 4.6, height 8.0 | 1 | 0 | 50.1 | 85.4 | 84.9 |
| Comp. Ex. 15 | 296 | diameter 5.6, height 12.0 | 1 | 0 | 49.5 | 88.1 | 85.0 |
| Comp. Ex. 16 | 1 | diameter 1.2, height 0.5 | 1 | 10 | 60.4 | 78.1 | 88.1 |
| Ex. 1 | 17 | diameter 1.8, height 6.5 | 1 | 10 | 62.5 | 77.3 | 88.5 |
| Ex. 2 | 24 | diameter 2.1, height 7.0 | 1 | 10 | 63.6 | 74.4 | 87.1 |
| Ex. 3 | 133 | diameter 4.6, height 8.0 | 1 | 10 | 66.5 | 78.4 | 85.6 |
| Comp. Ex. 17 | 296 | diameter 5.6, height 12.0 | 1 | 10 | 61.4 | 80.1 | 86.1 |
| Comp. Ex. 18 | 1 | diameter 1.2, height 0.5 | 1 | 20 | 61.5 | 74.5 | 88.4 |
| Ex. 4 | 17 | diameter 1.8, height 6.5 | 1 | 20 | 63.7 | 71.1 | 88.7 |
| Ex. 5 | 24 | diameter 2.1, height 7.0 | 1 | 20 | 63.5 | 70.7 | 87.8 |
| Ex. 6 | 133 | diameter 4.6, height 8.0 | 1 | 20 | 64.3 | 68.9 | 86.1 |
| Comp. Ex. 19 | 296 | diameter 5.6, height 12.0 | 1 | 20 | 61.1 | 75.8 | 86.6 |
| Comp. Ex. 20 | 1 | diameter 1.2, height 0.5 | 1 | 35 | 61.4 | 77.8 | 88.8 |
| Ex. 7 | 17 | diameter 1.8, height 6.5 | 1 | 35 | 65.2 | 72.6 | 89.0 |
| Ex. 8 | 24 | diameter 2.1, height 7.0 | 1 | 35 | 67.3 | 72.4 | 87.9 |
| Ex. 9 | 133 | diameter 4.6, height 8.0 | 1 | 35 | 66.9 | 74.7 | 86.8 |
| Comp. Ex. 21 | 296 | diameter 5.6, height 12.0 | 1 | 35 | 60.5 | 77.1 | 86.9 |
| Comp. Ex. 22 | 1 | diameter 1.2, height 0.5 | 1 | 50 | 62.8 | 76.5 | 87.3 |
| Ex. 10 | 17 | diameter 1.8, height 6.5 | 1 | 50 | 70.4 | 69.1 | 87.4 |
| Ex. 11 | 24 | diameter 2.1, height 7.0 | 1 | 50 | 71.5 | 69.7 | 86.4 |
| Ex. 12 | 133 | diameter 4.6, height 8.0 | 1 | 50 | 72 | 68.1 | 85.1 |
| Comp. Ex. 23 | 296 | diameter 5.6, height 12.0 | 1 | 50 | 61.1 | 74.8 | 85.2 |
| Comp. Ex. 24 | 1 | diameter 1.2, height 0.5 | 1 | 70 | 64.2 | 75.6 | 87.4 |
| Ex. 13 | 17 | diameter 1.8, height 6.5 | 1 | 70 | 68.9 | 70.5 | 88.1 |
| Ex. 14 | 24 | diameter 2.1, height 7.0 | 1 | 70 | 69.3 | 69.1 | 86.1 |
| Ex. 15 | 133 | diameter 4.6, height 8.0 | 1 | 70 | 67.4 | 67.1 | 85.1 |
| Comp. Ex. 25 | 296 | diameter 5.6, height 12.0 | 1 | 70 | 62.1 | 77.2 | 85.4 |
| Comp. Ex. 26 | 1 | diameter 1.2, height 0.5 | 1 | 90 | 63.2 | 80.2 | 87.4 |
| Comp. Ex. 27 | 17 | diameter 1.8, height 6.5 | 1 | 90 | 64.4 | 78.1 | 88.2 |
| Comp. Ex. 28 | 24 | diameter 2.1, height 7.0 | 1 | 90 | 64.8 | 76.3 | 86.8 |
| Comp. Ex. 29 | 133 | diameter 4.6, height 8.0 | 1 | 90 | 65.6 | 78.1 | 85.2 |
| Comp. Ex. 30 | 296 | diameter 5.6, height 12.0 | 1 | 90 | 60.5 | 79.7 | 85.2 |

Referring to Table 1, changes in the high-temperature characteristics of the battery cells occur if the volume of the cylindrical can is 10 to 140 cm³, for example, 16 cm³ to 136 cm³, or 16 cm³ to 133 cm³.

If the volume of the cylindrical can is as described, high-temperature characteristics are improved in the rechargeable lithium battery if the electrolyte additive and/or lithium imide salt are added compared to the case where the electrolyte additive and/or lithium imide salt are not added.

Overall, the rechargeable lithium battery cells according to some example embodiments represented by Examples 1 to 15 control the volumes of the cylindrical cans and limit the type or kind and content of the electrolyte additive, thereby increasing resistance at high temperatures and/or improving cycle-life.

### Description of symbols

- 100:: rechargeable lithium battery
- 112:: negative electrode
- 113:: separator
- 114:: positive electrode
- 120:: battery case
- 140:: sealing member

## Claims

1. A rechargeable lithium battery (100), comprising
a cylindrical can having a volume of 10 to 140 cubic centimeter (cm³);
an electrode assembly in the cylindrical can; and
an electrolyte in the electrode assembly,
wherein the electrolyte comprises
a non-aqueous organic solvent;
a lithium salt comprising a lithium imide salt; and
an additive comprising a compound represented by Chemical Formula 1, and
the lithium imide salt comprises an amount of 20 to 70 wt% based on a total amount of the lithium salt: 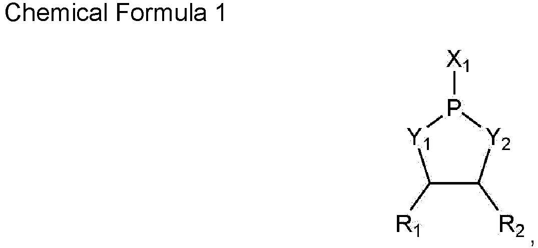 and
wherein, in Chemical Formula 1,
X₁ is a halogen atom;
Y₁ and Y₂ are each independently O or S; and
R₁ and R₂ are each independently, H, a halogen atom, a substituted or unsubstituted C1 to C10 alkyl group, vinyl group, a substituted or unsubstituted C6 to C10 aryl group, or a substituted or unsubstituted C2 to C10 heteroaryl group comprising a hetero atom of N, O, S, or P,
wherein "substituted" refers to replacement of hydrogen of a compound by a substituent selected from among a deuterium, a halogen, a hydroxyl group, an amino group, a substituted or unsubstituted C1 to C30 amine group, a nitro group, a substituted or unsubstituted C1 to C40 silyl group, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, a C1 to C20 alkoxy group, a C1 to C10 fluoroalkyl group, and a cyano group.

2. The rechargeable lithium battery of claim 1, wherein
the volume of the cylindrical can is 16 cm³ to 136 cm³, in particular of 16 cm³ to 133 cm³.

3. The rechargeable lithium battery of claim 1 or 2, wherein
X¹ is a fluorine atom.

4. The rechargeable lithium battery of any one of the preceding claims, wherein
Y¹ and Y² simultaneously are O.

5. The rechargeable lithium battery of claim 1, wherein the additive is a compound represented by Chemical Formula 1-1-1:

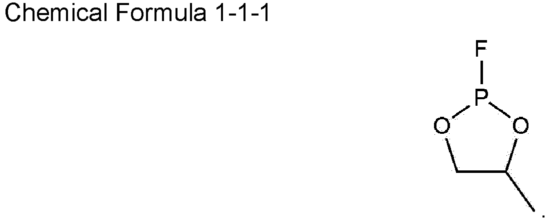

6. The rechargeable lithium battery of any one of the preceding claims, wherein
the additive is comprised in an amount of 0.1 to 10 wt% based on a total amount of the electrolyte.

7. The rechargeable lithium battery of any one of the preceding claims, wherein
the lithium imide salt is represented by Chemical Formula 2: 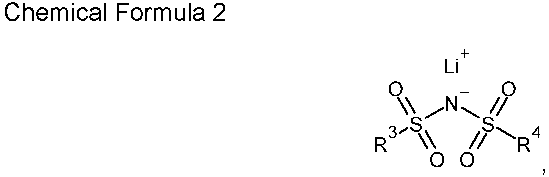 and
wherein, in Chemical Formula 2,
R³ and R⁴ are each independently a fluorine atom, or a C1 to C3 alkyl group substituted with at least one fluorine atom.

8. The rechargeable lithium battery of claim 7, wherein
R³ and R⁴ are each independently a fluorine atom or a methyl group substituted with three fluorine atoms.

9. The rechargeable lithium battery of claim 7, wherein
the lithium imide salt is represented by Chemical Formula 2-1 or 2-2:

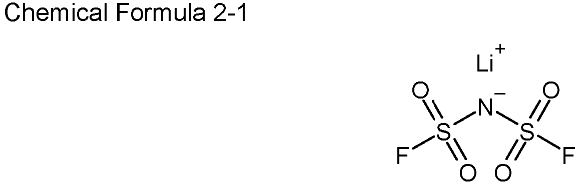

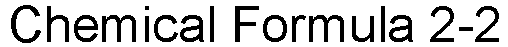

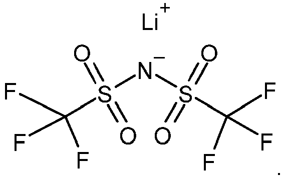

10. The rechargeable lithium battery of any one of the preceding claims, wherein
the lithium imide salt is comprised in an amount of 10 to 50 wt% based on a total amount of the lithium salt.

11. The rechargeable lithium battery o of any one of the preceding claims, wherein
the lithium salt further comprises at least one selected from among LiPF₆, LiBF₄, LiDFOP, LiDFOB, LiPO₂F₂, LiSbF₆, LiAsF₆, LiN(SO₂C₂F₅)₂, Li(CF₃SO₂)₂N, LiN(SO₃C₂F₅)₂, LiC₄F₉SO₃, LiClO₄, LiAlO₂, LiAlCl₄, LiN(CₓF₂ₓ₊₁SO₂)(C_{y}F_{2y+1}SO₂) wherein x and y are each integers from 1 to 20, LiCl, Lil, and LiB(C₂C₄)₂ (lithium bis(oxalato) borate (LiBOB)).

12. The rechargeable lithium battery of any one of the preceding claims, wherein
the non-aqueous organic solvent comprises at least one of a carbonate-based solvent, an ester-based solvent, an ether-based solvent, a ketone-based solvent, an alcohol-based solvent, and an aprotic solvent.

13. The rechargeable lithium battery of any one of the preceding claims, wherein
the electrode assembly comprises
a positive electrode (114) comprising a positive electrode active material layer;
a negative electrode (112) comprising a negative electrode active material layer; and
a separator positioned between the positive electrode (114) and the negative electrode (112).

14. The rechargeable lithium battery of claim 13, wherein
the positive electrode active material layer comprises a lithium nickel-based composite oxide represented by Chemical Formula A1:
Chemical Formula A1 Lia₁Niₓ₁M¹_{y1}M²z₁O_{2-b1}X_{b1}, and
wherein, in Chemical Formula A1,
0.9≤a1≤1.2, 0.7≤x1≤1, 0≤y1≤0.2, 0≤z1≤0.2, 0.9≤x1+y1+z1≤1.1, and 0≤b1≤0.1;
M¹ and M² are each independently one or more element selected from among Al, B, Ba, Ca, Ce, Co, Cr, Cu, Fe, Mg, Mn, Mo, Nb, Si, Sr, Ti, V, W, and Zr; and
X is one or more element selected from among F, P, and S.

15. The rechargeable lithium battery of claim 13, wherein
the negative electrode active material layer comprises at least one of graphite and Si composite.
